# EUROPÄISCHE PATENTSCHRIFT

(11) **EP 3 111 524 B1**
(45) Veröffentlichungstag und Bekanntmachung des Hinweises auf die Patenterteilung: **27.05.2020**
(21) Anmeldenummer: 15712068.4
(22) Anmeldetag: 27.02.2015
(51) Int. Cl.: H02G 1/08, H02G 1/10, H05B 6/36

(54) **VERLEGEHILFE ZUM VERLEGEN EINES KABELS, INSBESONDERE EINES INDUKTIONSKABELS**
LAYING AID FOR A CABLE, IN PARTICULAR AN INDUCTION CABLE
DISPOSITIF DE POSE D'UN CÂBLE, EN PARTICULIER UN CÂBLE D'INDUCTION

(30) Priorität: 28.02.2014 DE 102014203777
(43) Veröffentlichungstag der Anmeldung: 04.01.2017
(73) Patentinhaber: LEONI Kabel GmbH, 91154 Roth (DE)
(72) Erfinder: ANGERMANN, Gerhard, 91166 Georgensgemünd (DE); BITTERWOLF, Klaus, 91174 Spalt (DE); BRUNNER, Thomas, 91126 Schwabach (DE); DREINER, Michael, 51688 Wipperfürth (DE); ECK, Christian, 51688 Wipperfürth (DE); FÖRSTER, Jan, 51688 Wipperfürth (DE); GOSS, Sebastian, 91154 Roth (DE); MOSEBACH, Jens, 51688 Wippernfürth (DE); RAUPACH, Ulrich, 96049 Bamberg (DE); SESSNER, Rainer, 91154 Roth (DE)
(74) Vertreter: FDST Patentanwälte
(86) Internationale Anmeldenummer: PCT/EP2015/054190
(87) Internationale Veröffentlichungsnummer: WO 2015/128487

(56) Entgegenhaltungen:
- FR-A1- 2 660 790
- JP-A- S56 135 820
- JP-A- S59 187 312
- SU-A1- 855 816
- SU-A1- 915 152

## Beschreibung

Die Erfindung betrifft ein Kabel, insbesondere Induktionskabel, das sich in einer Längsrichtung entlang einer Längsachse erstreckt und zum Verlegen in ein Rohr vorgesehen ist, wobei an dem Kabel eine Verlegehilfe angebracht ist. Desweiteren betrifft die Erfindung ein Verfahren zum Verlegen eines sich in eine Längsrichtung erstreckenden Kabels, insbesondere Induktionskabels, bei dem eine Verlegehilfe bereitgestellt wird und das Kabel in Längsrichtung verlegt wird. Weiterhin betrifft die Erfindung eine Verlegehilfe zum Verlegen eines Kabels.

Auf dem technischen Gebiet der Inspektion oder Reinigung von Rohren sind Vorrichtungen bekannt, mit denen Kabel innerhalb des Rohres gezogen werden. So ist beispielsweise aus der JP S56 135 820 A eine Vorrichtung zu entnehmen, welche in ihrer Mitte ein Kabel mit Hilfe von drei um den Umfang des Kabels federbelasteten Armen fixiert. Die Arme stützen sich jeweils über Rollen an einer Rohrinnenwand ab. Eine ähnliche Vorrichtung ist weiterhin auch aus der JP S59 187 312 A zu entnehmen.

Weitere Vorrichtungen zum Ziehen eines Kabels durch ein Rohr sind zu entnehmen aus der SU 915 152 A1 oder der SU 855 816 A1 oder der FR 2 660 790 A1. Ein derartiges Kabel dient insbesondere zur Verwendung als ein sogenanntes Induktionskabel (alternativ auch Induktor genannt) zur Ausbildung eines oder mehrerer Induktionsfelder. Das Kabel ist hierbei insbesondere zur induktiven Heizung von Ölsand- und/oder Schwerstöllagerstätten, auch Reservoir genannt vorgesehen. Dazu wird das Kabel typischerweise in ein unterirdisch verlegtes Rohr eingezogen. Dieses verläuft in geeigneter Weise durch das Reservoir, beispielsweise in einer Tiefe von etwa 100 m und entlang einer Strecke von etwa 2 km. Eine derartige Anwendung eines solchen Induktionskabels ist beispielsweise aus der EP 2 250 858 B1 zu entnehmen.

Zum Aufbau eines Induktionsfeldes und einer Realisierung der induktiven Heizung umfasst das Kabel mehrere Kabeladern, die an definierten Trennstellen in einem Rastermaß mit definierter Länge von beispielsweise mehreren 10 m getrennt sind. Jede der Kabeladern wird dabei durch die Trennstellen in eine Anzahl von Aderabschnitten unterteilt.

Innerhalb des Kabels sind mehrere Kabeladern vorzugsweise zu Adergruppen zusammengefasst, wobei die Trennstellen oder Unterbrechungen der Adern einer jeweiligen Adergruppe im Wesentlichen an der gleichen Längenposition liegen. Typischerweise liegen zwei Adergruppen vor, deren Trennstellen relativ zueinander um das halbe Rastermaß verschoben sind. Mit anderen Worten: die Trennstellen einer ersten Adergruppe sind in Längsrichtung auf halber Strecke zwischen zwei Trennstellen einer zweiten Adergruppe angeordnet. Hierdurch ergibt sich ein Überlapp der Aderabschnitte verschiedener Gruppen, der insbesondere zur Ausbildung eines Induktionskabels dient.

Um die elektrischen Eigenschaften und insbesondere das Induktionsfeld zu verbessern, sind die Kabeladern typischerweise nicht parallel zur Kabellängsrichtung geführt, sondern beispielsweise miteinander verseilt. Alternativ sind mehrere Kabeladern zu Teilkabeln zusammengefasst und die Teilkabel sind miteinander verseilt oder verdreht. Dadurch ergibt sich insbesondere eine spiralförmige Anordnung der Kabeladern.

Ein derartiges Kabel ist beispielsweise in der WO 2013 079 201 A1 beschrieben. Diese offenbart eine Kabelader für ein Kabel, insbesondere für ein Induktionskabel, mit mehreren derartigen Kabeladern, die jeweils einen von einer Isolierung umgebenen Leiter aufweisen. Weiterhin ist die jeweilige Kabelader, also ein von einem Isolationsmantel umgebener Leiter, in Kabellängsrichtung an vorgegebenen Längenpositionen an Trennstellen unter Ausbildung zweier Aderenden unterbrochen. Zur Verbindung dieser ist ein Verbinder mit einem isolierenden Zwischenstück angeordnet und die Aderenden sind beidseitig des Zwischenstücks am Verbinder befestigt.

Zur Ausbildung eines Induktionskabels werden mehrere solcher Kabeladern in einem typischerweise mehrstufigen Verseilprozess zusammengefasst, beispielsweise dreistufig wie folgt: zunächst wird ein Aderbündel ausgebildet, bei dem mehrere Lagen von Kabeladern miteinander verseilt sind. Beispielsweise umfasst eine innere Lage sechs Kabeladern und eine äußere Lage zwölf Kabeladern. Mehrere solcher Aderbündel, beispielsweise sieben Stück sind dann miteinander um eine weitere Zugentlastung verseilt und bilden ein Teilkabel. Mehrere solcher Teilkabel, beispielsweise drei Stück sind dann miteinander zu dem Induktionskabel verseilt. Bei jedem Verseilen ist dabei die Schlagrichtung geeignet eingestellt, beispielsweise derart, dass zwei aufeinanderfolgende Verseilungen eine SZ-Verseilung bilden. Da das Induktionskabel typischerweise direkt mit einer vorgegebenen Gesamtlänge gefertigt wird, die beispielsweise 2 km beträgt, ist das Zusammenführen, das heißt insbesondere das Verseilen der Kabeladern entsprechend aufwendig.

Zum Zusammenfassen jeweils mehrerer Kabeladern zum Aderbündel, mehrerer Aderbündel zum Teilkabel und/oder mehrerer Teilkabel zum Induktionskabel sind möglicherweise eine Anzahl von Mäntel oder Bandierungen vorgesehen. Zusätzlich weist insbesondere jede der Kabeladern einen Isolationsmantel auf. Das komplette Induktionskabel umfasst häufig mehrere 100 einzelne Kabeladern und weist dementsprechend einen großen Durchmesser auf, beispielsweise von etwa 8 cm. Dadurch ist das Induktionskabel schwierig zu handhaben, das heißt beispielsweise zu transportieren und/oder zum Transport aufzurollen.

Das Induktionskabel wird typischerweise komplett gefertigt und anschließend an den Verwendungsort transportiert. Dort wird es dann verlegt, typischerweise in einem Rohr wie oben bereits erwähnt.

Um das Einziehen eines Kabels in ein Rohr zu vereinfachen ist aus der DE 822 264 bekannt, eine Schelle auf einem Kabel zu befestigen, wobei die Schelle auf ihrer Außenseite mit in Pfannen gelagerten Kugeln versehen ist. Dadurch wird insbesondere ein gleichzeitiges Einziehen mehrerer Kabel in eine Längsrichtung vereinfacht. Dazu umgreift die Schelle die mehreren Kabel.

Der Erfindung liegt die Aufgabe zugrunde, ein verbessertes und einfacher verlegbares Kabel, insbesondere Induktionskabel anzugeben. Desweiteren soll ein geeignetes Verfahren zum Verlegen eines solchen Kabels angegeben werden sowie eine geeignete Verlegehilfe.

Hierzu ist vorgesehen, dass ein Kabel, insbesondere ein Induktionskabel, sich in einer Längsrichtung entlang einer Längsachse erstreckt und zum Verlegen in ein Rohr vorgesehen ist. Dabei ist an dem Kabel eine Verlegehilfe angebracht die derart ausgebildet ist, dass das Kabel beim Verlegen um die Längsachse durch die Verlegehilfe gedreht wird. Durch die Verlegehilfe wird also beim Verlegen des Kabels, also insbesondere beim Einziehen des Kabels in das Rohr, eine Verdrehung oder auch Verdrillung des Kabels erzielt. Beispielsweise umfasst das Kabel geeigneterweise mehrere Teilkabel, die nach dem Verlegen miteinander verdreht angeordnet vorliegen, das heißt insbesondere spiralförmig (oder auch wendelförmig) entlang der Längsachse verlaufen. Beim Verlegen des Kabels werden die Teilkabel durch eine Drehung des Kabels vorteilhaft ebenfalls gedreht. Das heißt insbesondere, dass die Teilkabel mit Hilfe der Verlegehilfe beim Verlegen entlang der Längsrichtung miteinander verseilbar sind und beim Verlegen verseilt werden. Dadurch sind die Fertigung und/oder der Transport des Kabels bevorzugt dahingehend vereinfacht, dass ein Fertigungsschritt, beispielsweise die letzte Stufe eines mehrstufigen Verseilprozesses erst beim Verlegen erfolgt. Es ist daher insbesondere möglich, anstelle des kompletten Kabels zunächst die Teilkabel separat bereitzustellen, diese an einen Verwendungsort zu transportieren und schließlich die Teilkabel am Verwendungsort miteinander zum fertigen Kabel zusammenzufassen. Das auf diese Weise ausgebildete Kabel ist insbesondere kostengünstig und/oder mit geringerem Aufwand fertigbar.

Die Verlegehilfe weist einen Träger auf, an dem eine Anzahl von Rollelementen angebracht ist. Diese sind jeweils um eine Drehachse drehbar gehaltert, wobei jede der Drehachsen in einem vorgegebenen Anstellwinkel zur Längsrichtung steht. Die Rollelemente sind beispielsweise Räder oder Rollzylinder mit einer Abrollfläche, die radial um die Drehachse herum angeordnet ist. Dabei schließen die jeweilige Drehachse und die Längsrichtung des Kabels den Anstellwinkel ein.

In einer geeigneten Ausgestaltung ist der Träger an dem Kabel befestigt und dieses ist in einem Rohr mit einer Innenwand verlegbar. Dazu liegt ein Teil der Abrollfläche an der Innenwand an. Insbesondere rollt das Rollelement in einer Abrollrichtung beim Verlegen auf der Innenwand ab. In einer alternativen geeigneten Ausgestaltung ist der Träger ein Teil des Rohres oder das Rohr selbst und die Rollelemente sind beispielsweise in regelmäßigen Abständen auf der Innenwand angebracht. Die Abrollfläche rollt dann insbesondere auf dem Kabel ab.

Die Abrollrichtung ist dabei senkrecht zur Drehachse. Ist beispielsweise die Abrollrichtung gleich der Längsrichtung, dann beträgt der Anstellwinkel 90° und die Drehachse ist senkrecht zur Längsrichtung. In diesem Fall findet beim Verlegen keine Drehung des Kabels statt. Um vorteilhaft eine Drehung zu erzielen, ist der Anstellwinkel bevorzugt kleiner als 90° und größer als 0°. Hierdurch ist es insbesondere möglich, gleichzeitig eine Drehung des Kabels sowie eine Bewegung in Längsrichtung zu erzielen, mit anderen Worten, das Kabel unter einer Drehung (auch Drehbewegung) in das Rohr einzuziehen.

Bevorzugterweise weist das Rohr eine Eingangsöffnung auf, an der mehrere Teilkabel bereitgestellt sind, die beim Einziehen in das Rohr mittels der Drehung miteinander verseilbar sind. Unter Einziehen wird insbesondere auch verstanden, dass die zur Bewegung des Kabels in Längsrichtung nötige Kraft nicht notwendigerweise lediglich eine Zugkraft ist, sondern zusätzlich oder stattdessen auch eine Schubkraft ist. Mit anderen Worten: unter Einziehen wird hier allgemein auch Eindrücken oder Einschieben verstanden.

In einer weiteren bevorzugten Ausgestaltung ist der Anstellwinkel einstellbar und zum Einstellen des Anstellwinkels sind die Rollelemente jeweils um eine sich radial von der Längsachse erstreckende Rotationsachse drehbar (oder auch schwenkbar) gelagert. Insbesondere ist die Rotationsachse des jeweiligen Rollelementes senkrecht zu dessen Drehachse. Durch das Drehen des Kabels weist dieses insbesondere eine Periodenlänge auf, innerhalb der jedes der Teilkabel spiralförmig einmal um die Längsachse herumgeführt ist. Durch Einstellen des Anstellwinkels ist es insbesondere möglich eine geeignete Periodenlänge auszuwählen und/oder einzustellen. Insbesondere ist es möglich, eine geeignete Schlaglänge für eine Verseilung auszuwählen und/oder einzustellen.

Eine Rotation des Rollelementes um die Rotationsachse zum Einstellen des Anstellwinkels erfolgt beispielsweise mittels eines Motors oder durch einen Anwender per Hand. Bevorzugterweise ist der Anstellwinkel beim Verlegen einstellbar. Alternativ ist der Anstellwinkel vor dem Verlegen einstellbar und beim Verlegen vorgegeben. Geeigneterweise weist die Verlegehilfe eine Fixier-, Halte- oder Einrastvorrichtung auf, die ein Fixieren des Anstellwinkels derart gewährleistet, dass das Rollelement beim Verlegen den Anstellwinkel beibehält. Insbesondere ist dadurch ein unbeabsichtigtes Verstellen des Anstellwinkels vorteilhaft vermeidbar.

In einer bevorzugten Weiterbildung sind die Rollelemente jeweils in einem einstellbaren Abstand von der Längsachse angeordnet. Mit anderen Worten: die Rollelemente sind in radialer Richtung von der Längsachse aus in einem einstellbaren Abstand angeordnet. Hierdurch ist es insbesondere möglich, die Rollelemente derart einzustellen, dass deren jeweilige Abrollfläche zum Abrollen geeignet an einer Kontaktfläche anliegt, aufliegt oder ansitzt. Die Kontaktfläche ist dabei beispielsweise die Innenwand des Rohres oder das Kabel.

Der Abstand ist beispielsweise durch Verschieben der Rollelemente in radialer Richtung einstellbar. Das Verschieben erfolgt vorzugsweise automatisch, geeigneterweise mittels eines Federelementes. Dadurch ist ein optimaler Kontakt von Rollelement und Kontaktfläche insbesondere beim Verlegen gewährleistet. Alternativ oder zusätzlich ist ein manueller oder motorisierter Einstellmechanismus vorgesehen. Dadurch ist es vorteilhafterweise möglich, den Abstand in Abhängigkeit von Abmessungen des Rohres und/oder des Kabel in radialer Richtung einzustellen. Vorzugsweise weist das Rohr einen Innendurchmesser auf und das Kabel einen Außendurchmesser, dann ist es insbesondere möglich, die Verlegehilfe passend für verschiedene Verhältnisse von Innendurchmesser zu Außendurchmesser einzustellen. Beispielsweise ist ein Kabel mit einem Außendurchmesser vorgegeben, dann ist es möglich, dieses Kabel in Rohre mit unterschiedlichen Innendurchmessern einzuziehen.

Zweckmäßigerweise umfasst der Träger einen das Kabel umgreifenden Rahmen mit einer Außenseite, auf der die Rollelemente angebracht sind. Insbesondere im Fall eines an dem Kabel angebrachten Trägers ist hierdurch eine geeignete Anordnung des Trägers am Kabel gewährleistet. Vorzugsweise ist der Rahmen an dem Kabel befestigt, beispielsweise nach Art einer Schelle an dem Kabel festgeklemmt. Alternativ oder zusätzlich ist der Rahmen mit dem Kabel stoffschlüssig verbunden, beispielsweise geklebt oder geschweißt.

In einer bevorzugten Ausgestaltung weist der Rahmen eine Anzahl von abgerundeten Rahmenecken auf und das Kabel umfasst mehrere Teilkabel, wobei in jeder Ecke rahmeninnenseitig eines der Teilkabel anliegt. Bevorzugterweise sind die Teilkabel lediglich mittels des Rahmens 24 zusammengehalten. Hierdurch ist insbesondere eine besonders platzsparende Anordnung realisiert. Alternativ ist jedoch zusätzlich beispielsweise eine stoffschlüssige Verbindung der Teilkabel miteinander und/oder eine die Teilkabel gemeinsam umgebende Bandierung vorgesehen.

Im Querschnitt, das heißt quer zur Längsrichtung weist das Kabel bevorzugt ein mehreckiges Umfangsprofil auf. Beispielsweise umfasst das Kabel drei Teilkabel, und das Umfangsprofil ist ein Dreieck mit abgerundeten Ecken. Dann ist auch der Rahmen bevorzugterweise dreieckig mit abgerundeten Rahmenecken und jedes der Teilkabel liegt innenseitig an jeweils einer der Rahmenecken an. Durch die abgerundeten Rahmenecken ist insbesondere ein Form- und Kraftschluss zwischen dem Kabel und dem Träger verbessert. Zweckmäßigerweise ist dadurch ein Verrutschen des Trägers relativ zum Kabel insbesondere in Drehrichtung verhindert.

Die abgerundeten Rahmenecken sind zur Ausbildung des Rahmens 24 bevorzugt mit Querstegen verbunden. Bevorzugterweise sind die Rollelemente auf den Querstegen angeordnet, wodurch die Verlegehilfe insbesondere platzsparend ist. Alternativ sind die Rollelemente auf den Rahmenecken oder sowohl dort als auch auf den Querstegen angeordnet.

Bevorzugterweise weist das Kabel in Längsrichtung eine Zugentlastung auf, die an der Verlegehilfe befestigt ist. Insbesondere im Falle eines Induktionskabels stellen die Trennstellen der einzelnen Kabeladern Schwachstellen bezüglich einer in Längsrichtung gerichteten Kraft dar. Eine solche Kraft wirkt insbesondere beim Einziehen in das Rohr. Die Zugentlastung gewährleistet daher zweckmäßigerweise ein sicheres Einziehen des Kabels und ist beispielsweise als in Längsrichtung verlaufendes Seil ausgebildet.

Die Zugentlastung ist bevorzugt durchgängig ausgeführt. Dazu weist die Verlegehilfe eine geeignete Durchführung auf, in der die Zugentlastung insbesondere befestigt ist, beispielsweise geklemmt, geklebt oder verschweißt. Alternativ ist die Zugentlastung unter Ausbildung von Enden unterbrochen und die Enden sind jeweils mittels eines geeigneten Anschlusses an der Verlegehilfe befestigt.

Zweckmäßigerweise weist die Verlegehilfe eine Antriebsvorrichtung auf. Diese dient vorteilhafterweise zum Antrieb der Rollelemente. Hierdurch ist das Kabel insbesondere einfacher verlegbar. Insbesondere ist eine geringere Kraft zum Einziehen benötigt als im Falle ohne Antriebsvorrichtung. Geeigneterweise ist das Kabel automatisch verlegbar. Die Antriebsvorrichtung umfasst beispielsweise einen Motor oder eine Mehrzahl von Motoren. Beispielsweise kann für jedes der Rollelemente ein Motor vorgesehen sein.

In einer vorteilhaften Ausgestaltung weist die Verlegehilfe eine wendelförmige Profilierung auf. Diese ist insbesondere auf der Innenwand des Rohres ausgebildet und/oder auf dem Kabel und/oder auf dem Träger. Beispielsweise ist die Profilierung nach Art eines Innengewindes auf der Innenwand ausgeführt oder auf dem Kabel als Gewinde ausgebildet. Die Profilierung gewährleistet insbesondere eine spiralförmige Führung des Kabels beim Einziehen in das Rohr. Dadurch ist vorteilhaft eine Drehung des Kabels mit den oben bereits genannten Vorteilen realisiert.

Beispielsweise sind an dem Rohr innenwändig eine Anzahl von Rillen (oder auch Führungsrillen, -schienen) angebracht, in denen das Kabel beim Verlegen geführt wird. Dazu weist das Kabel vorteilhaft einen nicht-runden Querschnitt auf, sondern ist beispielsweise nach Art der oben bereits erwähnten Dreiecksform ausgeführt. Wenigstens eines der Teilkabel liegt vorzugsweise wenigstens teilweise in einer Rille ein und ist dadurch spiral- oder wendelförmig in Längsrichtung führbar.

Eine Führung mittels einer Profilierung ist vorteilhafterweise in Kombination mit Rollelementen ausgeführt. Dabei greifen diese bevorzugt in eine jeweilige Rille ein und sind auf diese Weise geführt. Zweckmäßigerweise sind die Rollelemente durch die Rille geeignet positioniert, insbesondere in Bezug auf den Anstellwinkel. Dieser ist geeigneterweise durch die Profilierung derart vorgebbar, dass diese eine insbesondere bei ihrer Ausbildung vorgebbare Periodizität aufweist. Dadurch ist es insbesondere möglich auf eine Fixiervorrichtung zu verzichten.

Geeigneterweise weist das Kabel eine Profilierung auf, beispielsweise ist auf dem Kabel in vorgegebenen Abständen eine Anzahl von Führungsstiften oder -dornen befestigt, die jeweils in eine Rille eingreifen. Alternativ oder zusätzlich weist das Kabel eine Ummantelung auf, die eine spiralförmig profilierte Außenfläche aufweist. Beispielsweise ist auf das Kabel eine Ummantelung aufextrudiert, auf deren Außenfläche eine Anzahl von spiralförmigen und sich in Längsrichtung erstreckenden Längsrippen ausgebildet ist. In einer alternativen Ausgestaltung sind solche Längsrippen oder eine andere Profilierung des Kabels mit entsprechenden auf der Innenwand des Rohres angebrachten Führungsstiften kombiniert.

Zum Betrieb ist das Kabel insbesondere an eine Stromquelle derart angeschlossen, dass in dem Kabel ein Strom fließt und eine Spannung anliegt. Im Falle eines Induktionskabels ist die Stromquelle typischerweise eine Wechselstromquelle und der Strom sowie die Spannung weisen eine Frequenz auf.

Zweckmäßigerweise weist die Verlegehilfe ein Sensormodul auf, mit wenigstens einem Sensor zur Ermittlung wenigstens eines Wertes eines Betriebsparameters des Kabels. Dabei werden unter Betriebsparameter beispielsweise der Strom, die Spannung und/oder die Frequenz verstanden. Ein weiterer Betriebsparameter ist beispielsweise eine in oder an dem Kabel gemessene Temperatur. Durch Ermittlung des Wertes einer dieser Betriebsparameter ist insbesondere eine Überwachung der Funktionalität des Kabels möglich. Für eine kontinuierliche Überwachung werden geeigneterweise mehrere Werte des Betriebsparameters über einen vorgegebenen Zeitraum erfasst.

Das Induktionskabel ist regelmäßig in ein Reservoir (oder auch allgemein im Erdboden), beispielsweise in ein Ölsandfeld eingelegt oder in diesem vergraben. Der Zustand des Reservoirs ist durch einen oder mehrere Umgebungsparamater charakterisiert, beispielsweise Temperatur, Dichte, Viskosität oder Leitfähigkeit des Reservoirs. Ein Parameter kann dabei an unterschiedlichen Stellen im Reservoir unterschiedliche Werte annehmen. Um den Zustand des Reservoirs zu überwachen, ist das bzw. sind die Sensormodule zusätzlich oder alternativ zur Ermittlung wenigstens eines Wertes eines solchen Umgebungsparameters ausgebildet. Im Falle mehrerer Verlegehilfen ist bevorzugt an mehreren dieser Verlegehilfen jeweils ein Sensormodul angeordnet.

Im Folgenden wird ein Verfahren zum Verlegen eines sich in eine Längsrichtung erstreckenden Kabels beschrieben. Dabei gelten die im Zusammenhang mit dem oben beschriebenen Kabel angegebenen Vorteile und Weiterbildungen sinngemäß auch für dieses Verfahren und dessen Weiterbildungen.

Bevorzugterweise wird bei einem Verfahren zum Verlegen eines sich in eine Längsrichtung erstreckenden Kabels, insbesondere eines Induktionskabels, eine Verlegehilfe bereitgestellt und das Kabel in Längsrichtung verlegt. Dabei wird das Kabel beim Verlegen um eine sich in der Längsrichtung erstreckende Längsachse gedreht. Hierdurch ist insbesondere ein zum Verlegen eines Induktionskabels verbessertes Verfahren bereitgestellt.

Geeigneterweise wird das Kabel einer Eingangsöffnung des Rohres zugeführt, beispielsweise eingeschoben. Bevorzugterweise wird das Kabel lediglich innerhalb des Rohres gedreht und nicht außerhalb des Rohres, insbesondere wird das Kabel dabei auch in Längsrichtung bewegt. Mit anderen Worten, das Kabel weist einen außerhalb und einen innerhalb des Rohres angeordneten Abschnitt auf, wobei der außerhalb angeordnete Abschnitt nicht gedreht wird, jedoch der innerhalb des Rohres angeordnete Abschnitt. Dies wird vorzugsweise dadurch erreicht, dass die Verlegehilfe vorteilhaft lediglich innerhalb des Rohres wirkt. Dadurch ist es insbesondere möglich, ein Kabel beim Verlegen zu verdrehen. Ein zu verdrehendes Kabel ist daher insbesondere als unverdrehtes Kabel fertigbar, wodurch sich dieses einfacher fertigen lässt. Mit anderen Worten: das Verdrehen wird nicht werksseitig vorgenommen, sondern beim Verlegen ausgeführt. Ungeachtet dessen sind jedoch insbesondere bei mehrstufig verdrehten Kabeln möglicherweise weitere Verdrehungen vorgesehen, die weiterhin werksseitig ausgeführt werden. In diesem Fall wird insbesondere die letzte Verdrehung beim Verlegen vorgenommen.

Geeigneterweise umfasst das Kabel mehrere Teilkabel, die beim Verlegen miteinander verseilt werden. Dadurch ist es insbesondere möglich, eine letzte Verseilstufe bei der Herstellung eines Kabels einzusparen. Hierdurch wird die Fertigung des Kabels vorteilhaft vereinfacht. Beim Verseilen werden die Teilkabel mit einer bevorzugterweise vorgebbaren Schlaglänge miteinander verseilt. Diese wird geeigneterweise je nach Bedarf eingestellt.

In einer geeigneten Ausgestaltung wird das Verlegen in Längsrichtung als Einziehen in ein sich in Längsrichtung erstreckendes Rohr ausgeführt. Hierdurch wird insbesondere das Verlegen des Kabels in ein insbesondere schon vorhandenes Rohr ermöglicht. Beispielsweise ist zur Erschließung eines Ölsandgebietes in diesem bereits ein Rohr verlegt worden und ein Induktionskabel wird in dieses Rohr eingezogen und dabei gedreht und/oder verseilt.

In einer weiteren geeigneten Ausgestaltung umfasst die Verlegehilfe eine Profilierung, die rohrinnenseitig und/oder auf dem Kabel ausgebildet ist. Diese gewährleistet insbesondere, dass das Kabel beim Einziehen in das Rohr spiralförmig geführt wird. Zweckmäßigerweise wird das Kabel insbesondere mittels an der Verlegehilfe angebrachter und schräg angestellter Rollelemente gedreht.

Um das Einziehen zu vereinfachen ist vorteilhafterweise ist ein Schmier- oder Gleitmittel vorgesehen, welches beispielsweise beim Einziehen auf die Rollelemente aufgebracht wir oder vor dem Einziehen auf der Innenwand des Rohres aufgebracht wird. Insbesondere bei der Verwendung von Führungsstiften weist die Verlegehilfe, insbesondere der Träger zweckmäßigerweise einen Schmiermittelvorrat auf, aus dem beim Einziehen automatisch das Schmiermittel geeignet auf Führungsstifte aufgetragen wird. Anstelle der Führungsstifte ist alternativ eine als eine Anzahl von Rippen ausgebildete Profilierung vorgesehen. Beispielsweise weist das Kabel dabei eine Funktionsleitung zur Führung von Schmiermittel entlang der Längsrichtung auf. Über geeignete Auslässe ist es dann möglich, dass Schmiermittel beispielsweise auf dem Kabel und insbesondere in einem Zwischenraum zwischen dem Kabel und der Innenwand des Rohres. aufzubringen.

Vorteilhafterweise verbleibt die Verlegehilfe nach dem Verlegen am Kabel und/oder im Rohr. Zweckmäßigerweise ist es insbesondere möglich, die Verlegehilfe auch entsprechend zum Ausziehen des Kabels zu verwenden. Dies ist insbesondere vorteilhaft, falls das Kabel beispielsweise gewartet oder ausgetauscht werden soll.

Nachfolgend wird ein Ausführungsbeispiel der Erfindung anhand einer Zeichnung näher erläutert. Darin zeigen:
- Fig. 1: ein Kabel im Querschnitt,
- Fig. 2: das Kabel gemäß Fig. 1 im Querschnitt mit einem Rahmen, in einem Rohr,
- Fig. 3: das Kabel gemäß Fig. 2 in Draufsicht,
- Fig. 4: ein alternatives Rohr in Draufsicht, und
- Fig. 5: schematisch das Einziehen des Kabels gemäß Fig. 1 in ein Rohr.

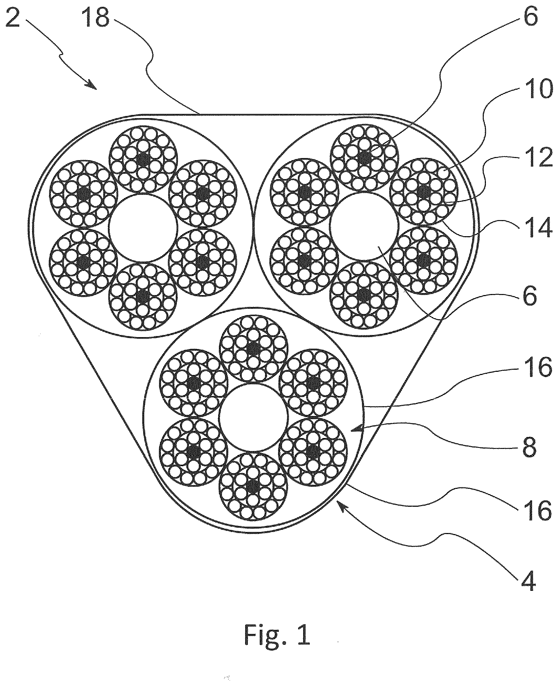

Ein Ausführungsbeispiel eines Kabels 2 ist schematisch und im Querschnitt in Fig. 1 dargestellt. Das hier gezeigte Kabel 2 umfasst drei miteinander verseilte Teilkabel 4. Jedes dieser Teilkabel 4 umfasst sechs um eine Zugentlastung 6 herum verseilte Aderbündel 8. Jedes dieser Aderbündel 8 weist wiederum achtzehn Kabeladern 10 auf, die um eine Zugentlastung 6 herum angeordnet sind. Dabei weist das Aderbündel 8 eine sechs Kabeladern 10 umfassende Innenlage 12 und eine zwölf Kabeladern 10 umfassende Außenlage 14 auf. Die Innenlage 12, die Außenlage 14, das Teilkabel 4 und das gesamte Kabel 2 sind bevorzugt jeweils von einem zusätzlichen Mantel 16 umgeben.

In der hier gezeigten Ausgestaltung ist der die drei Teilkabel 4 umgebende äußerste Mantel 16 als Bandierung ausgeführt. Das resultierende Querschnittsprofil des Kabels 2 ist dadurch ein Dreieck 18 mit abgerundeten Ecken. Insbesondere entspricht das Dreieck 18 in der hier gezeigten Ausführungsform einer durch den Mantel 16 definierten Umrandung. In einer alternativen, hier nicht gezeigten Ausführungsform ist der Mantel 16 mit einem kreisförmigen Querschnittsprofil derart ausgeführt, dass auch das gesamte Kabel im Querschnitt im Wesentlichen kreisförmig ist.

Bei dem dargestellten Kabel 2 sind die einzelnen Aderbündel 8 jeweils als Verseilelemente mit einer 1-6-12-er Verseilung von Einzelelementen gebildet. Das zentrale Einzelelement ist dabei als eine Zugentlastung 6 ausgebildet. Das derart hergestellte Aderbündel 8 weist beispielsweise einen Durchmesser im Bereich von etwa 8 bis 15 mm, insbesondere von etwa 12 mm auf.

Die einzelnen Teilkabel 4 sind wiederum als Verseilverbund bestehend aus der zentralen Zugentlastung 6 und sechs darum verseilten Aderbündeln 8 ausgebildet. Dieser Verseilverbund ist im Ausführungsbeispiel, jedoch nicht zwingend noch von einem Mantel 16 umgeben, welcher beispielsweise als aufgespritzter, extrudierter Mantel oder auch als eine Bandierung beispielsweise mittels eines Polyestertapes ausgebildet ist. Dieses Teilkabel 4 weist vorzugsweise einen Durchmesser im Bereich von einigen wenigen Zentimetern, beispielsweise im Bereich von 2,5 bis 6 cm und insbesondere im Bereich von etwa 4 cm auf.

Zwischen den insgesamt drei Teilkabeln 4 ist zweckdienlicherweise ergänzend noch in nicht näher dargestellter Weise eine zentrale Zugentlastungsader und/oder eine andere Funktionsleitung eingebracht.

Die maximale Breite des Kabels 2, also im Falle der dreieckförmigen Ausgestaltung gemäß Fig. 1 eine Schenkellänge des gleichschenkligen Dreiecks 18, beträgt wiederum mehrere Zentimeter, insbesondere etwa 6 bis 12 cm und vorzugsweise etwa 8 cm. Die drei Teilkabel 4 sind wiederum miteinander verseilt. Das Kabel 2 ist zweckdienlicherweise noch von einem Mantel 16 umgeben, welcher mittels eines Bandierungsverfahrens ausgebildet ist. Zweckdienlicherweise weist dieser Mantel 16 eine Mantelstärke im Bereich von einigen Millimetern, insbesondere im Bereich von 2,5 bis 5 mm auf.

Das ausgebildete Kabel 2 weist eine Länge vorzugsweise von mehreren 100 Metern bis hin zu wenigen Kilometern auf.

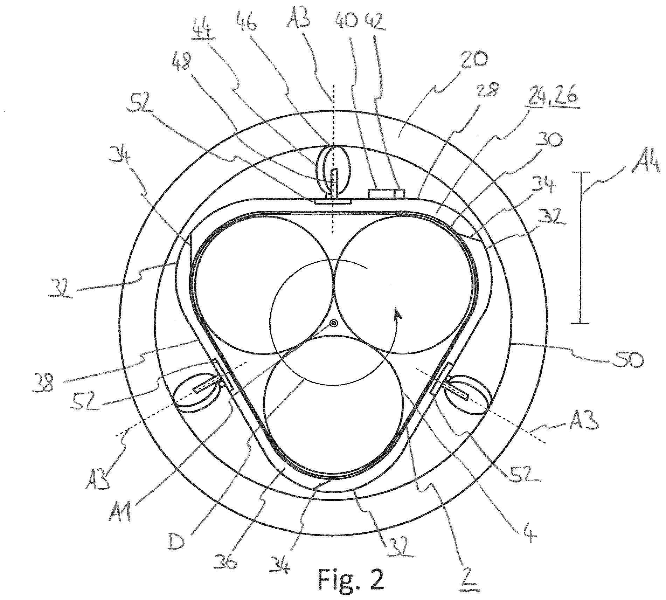

In Fig. 2 dargestellt ist das Kabel 2 gemäß Fig. 1 in vereinfachter Darstellung. Das Kabel 2 ist in einem Rohr 20 angeordnet mittels einer Verlegehilfe 22 in dem Rohr 20 drehbar. Insbesondere ist das Kabel 2 bei einer Bewegung in Längsrichtung L um eine Längsachse A1 in einer Drehrichtung D drehbar. Dabei sind die Längsrichtung L und die Längsachse A1 hier senkrecht zur Figurenebene.

Die Verlegehilfe 22 umfasst in der hier gezeigten Ausführungsform einen als Rahmen 24ausgebildeten Träger 26, der nach Art einer Triangel, das heißt als Dreieck mit abgerundeten Ecken ausgestaltet ist. Vorzugsweise umfasst die Verlegehilfe 22 mehrerer solcher Rahmen 24. Der Rahmen 24 weist eine Außenseite 28 und eine Innenseite 30 auf und ist derart an dem Kabel 2 montiert, dass die drei Teilkabel 4 von dem Rahmen 24 umgriffen sind und jedes der Teilkabel 4 jeweils rahmeninnenseitig in einer Rahmenecke 32 einliegt, das heißt an der Innenseite 30 des Rahmens 24 anliegt. Dabei ist der die Teilkabel 4 umgebende Mantel 16 in den Rahmenecken 32 insbesondere zwischen der Innenseite 30 des Rahmens 24 und dem in der jeweiligen Rahmenecke 32 einliegenden Teilkabel 4 angeordnet.

In Fig. 2 ist der Rahmen 24 entlang dreier Trennstellen 34 vorteilhaft in drei Teilstücke 36 zerlegbar, wodurch ein Anbringen des Rahmens 24 an dem Kabel 2 erleichtert wird. Die Trennstellen 34 sind hier auf den Rahmenecken 32 angeordnet und die Teilstücke 36 umfassen jeweils einen Steg 38 des Rahmens 24. Alternativ sind die Trennstellen 34 auf den Stegen 38 angeordnet. Auch können mehr oder weniger als drei Trennstellen 34 vorgesehen sein. Desweiteren ist wenigstens eine Trennstelle 34 durch ein hier nicht gezeigtes Scharnier derart ersetzt, dass sich der Rahmen 24 nach Art einer Schelle um das Kabel 2 legen lässt. Die Trennstellen 34 sind bevorzugt mit hier nicht gezeigten Befestigungselementen versehen, um insbesondere die Stabilität des Rahmens 24 zu verbessern. Beispielsweise sind Schraub- oder Klemmverbindungen vorgesehen. Geeigneterweise ist zudem der Rahmen 24 an dem Kabel 2 befestigt, beispielsweise sind der Rahmen 24 und der Mantel 16 verklebt.

Der in Fig. 2 gezeigte Rahmen 24 weist zusätzlich ein Sensormodul 40 mit einem Sensor 42 auf. Zur Erzeugung eines Induktionsfeldes ist jede der Kabeladern 10 mit einem Strom und einer Spannung bei einer vorgegebenen Frequenz beaufschlagt. Der Sensor 42 ist dann beispielsweise ein Hall-Sensor, mittels dessen das Sensormodul 40 das Induktionsfeld überwacht. In einer hier nicht gezeigten Ausführungsform sind in dem Kabel 2 eine Anzahl von Funktionsleitungen vorgesehen, beispielsweise als Lichtwellenleiter ausgebildete Temperatursensoren. Diese sind dann mit einem oder mehreren Sensormodulen 40 verbunden.

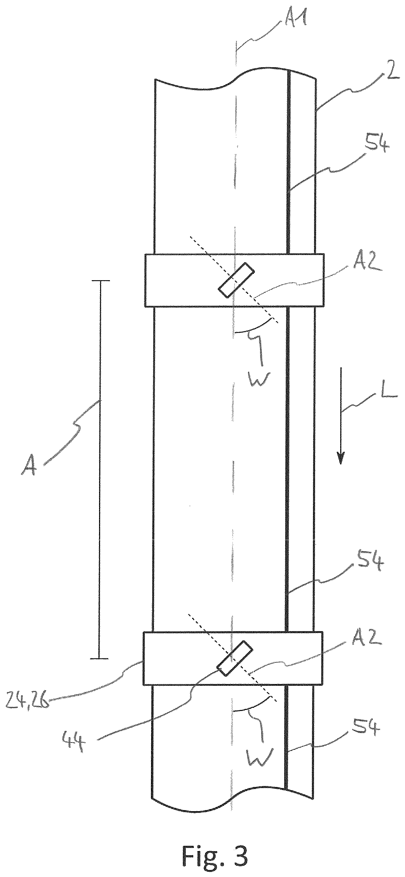

Auf der Außenseite 28 des Rahmens 24 ist eine Anzahl von Rollelementen 44 angeordnet, in Fig. 2 drei Stück. Diese sind als Rollen mit einer Abrollfläche 46 ausgebildet und mittels einer Halterung 48 an dem Rahmen 24 um eine Drehachse A2 drehbar gehaltert. Alternativ sind die Rollelemente 44 als Rollzylinder oder auch kegelförmig ausgebildet. Insbesondere sind die Rollelemente 24 rotationssymmetrisch ausgebildet. Das Rohr 20 weist dabei eine Innenwand 50 auf, auf der die Rollelemente 44 abrollen. Diese sind dabei in einem Anstellwinkel W zur Längsrichtung L angestellt, wie besonders in Kombination mit Fig. 3 deutlich wird. Diese zeigt das Kabel 2 gemäß Fig. 2 schematisch in einer Draufsicht. Desweiteren sind zwei Rahmen 24 mit Rollelementen 44 dargestellt. Die Rahmen 24 sind entlang der Längsrichtung L in vorgegebenen Abständen A montiert.

Die Drehachse A2 des jeweiligen Rollelementes 44 und die Längsrichtung L schließen den Anstellwinkel W ein. Dieser wiederum ist durch Rotation des Rollelementes 44 um eine Rotationsachse A3 einstellbar, beispielsweise mittels eines Motors. Zweckmäßigerweise ist eine hier nicht näher dargestellte Fixiervorrichtung vorgesehen, mit der insbesondere eine unbeabsichtigte Rotation um die Rotationsachse A3 unterbunden ist. Beispielsweise ist ein Gesperre oder eine andere Rastvorrichtung vorgesehen, um die Rotation geeignet einzuschränken.

Die Rollelemente 44 sind jeweils in einem Abstand A4 in radialer Richtung von der Längsachse A1 angebracht. Dieser Abstand A4 ist bevorzugterweise einstellbar, beispielsweise mittels eines hier nicht gezeigten Federelementes zur automatischen Einstellung. Hierdurch ist es insbesondere möglich, Unebenheiten beim Abrollen auszugleichen oder den Rahmen 24 für Rohre 20 mit unterschiedlichen Durchmessern zu verwenden.

Durch das Einstellen des Anstellwinkels W ist vorteilhafterweise die Drehbewegung des Kabels 2 bei Führung in Längsrichtung L durch das Rohr 20 einstellbar, insbesondere erfährt das Kabel 2 beim Einziehen in das Rohr 20 einen Vorschub, der mittels der Verlegehilfe 22 zumindest teilweise in eine Drehung oder auch Drehbewegung übersetzt wird. Mittels des Anstellwinkels W ist dann insbesondere das Verhältnis von Vorschub zu Drehung einstellbar. Insbesondere weist das Kabel 2 durch das Drehen eine Spiralform auf, mit einer Periode P, die mittels des Anstellwinkels W einstellbar, das heißt wählbar oder vorgebbar ist. In dem hier gezeigten Ausführungsbeispiel werden insbesondere durch Vorschub des Kabels 2 in Längsrichtung L die drei Teilkabel 4 mit einer der Periode P entsprechenden Schlaglänge miteinander verseilt.

An der Verlegehilfe 22, insbesondere an jedem der Rahmen 24 ist eine Antriebsvorrichtung 52 vorgesehen, zum Antreiben der Rollelemente 44. Dadurch ist beispielsweise das Einziehen des Kabels 2 in das Rohr 20 dahingehend vereinfacht, dass eine zum Einziehen benötigte Zug- oder Schubkraft verringert ist. Die Antriebsvorrichtung 52 umfasst in Fig. 2 drei Motoren je Rahmen, die jeweils eines der Rollelemente 44 antreiben. Alternativ ist es möglich, lediglich nur einen Teil der Rollelemente 44, beispielsweise lediglich eines anzutreiben. Auch ist es alternativ möglich, lediglich einen Motor für mehrere Rollelemente 44 zu verwenden. Dies ist beispielsweise zweckmäßig, wenn auf einem Steg 38 mehrere Rollelemente 44 angebracht sind.

Fig. 3 zeigt weiterhin, dass in Längsrichtung L vorteilhafterweise eine Zugentlastung 54 vorgesehen ist. Diese ist hier als sich in Längsrichtung L erstreckendes Seil, beispielsweise aus Kevlar ausgestaltet. Die Zugentlastung 54 ist insbesondere an jedem der Rahmen 24 befestigt, wodurch eine durchgängige Zugentlastung 54 gewährleistet ist.

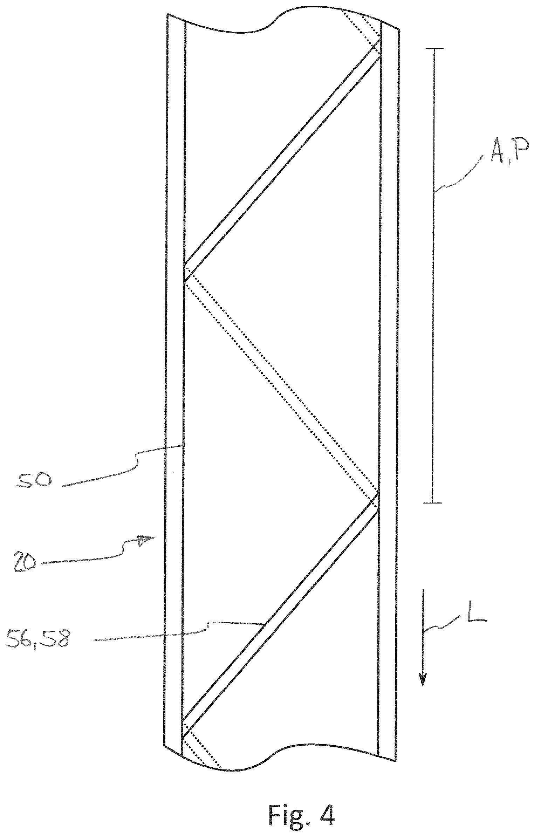

Fig. 4 zeigt ein alternatives Rohr 20, das als Teil der Verlegehilfe 22 eine innenwändige, das heißt auf dessen Innenwand 50 ausgebildete Profilierung 56 aufweist. Diese ist hier als schräg zur Längsrichtung L auf der Innenwand 50 des Rohres 20 verlaufende Rille 58 ausgestaltet. Insbesondere ist die Profilierung 56 dadurch spiralförmig mit einer entsprechenden Periode P. In Kombination mit dem in den Fig. 2 und 3 gezeigten Träger 26 dient die Profilierung 56 beispielsweise als Aufnahme oder auch Schiene für wenigstens eines der Rollelemente 44. Vorteilhafterweise sind der Abstand A der Träger und die Periode P derart ausgewählt, dass ein Rollelement 44 jedes Rahmens 24 in die Rille 58 eingreift. In einer geeigneten Weiterbildung sind mehrere Rillen 58 vorgesehen, beispielsweise derart, dass jedes der in Fig. 2 gezeigten drei Rollelemente 44 in jeweils eine Rille 58 eingreift. In einer hier nicht dargestellten Alternative ist das Kabel 2 mit einem runden Mantel 16 versehen und die Rillen 58, das heißt die Profilierung 56 ist auf dem Mantel 16 angeordnet, insbesondere aus diesem ausgebildet, beispielsweise mittels eines Extrusionsverfahrens. Die Rollelemente 44 sind dann zweckmäßigerweise auf der Innenwand 50 des Rohres 20 angeordnet und insbesondere in geeigneter Weise schräg angestellt.

Alternativ ist in einer hier nicht weiter gezeigten Ausführungsform das Kabel 2 mit einem runden Querschnitt ausgebildet und umfasst als Profilierung 56 eine auf dem Mantel 16 ausgebildete Rippe, die geeigneterweise in eine Rille 58 auf der Innenwand 50 des Rohres 20 gemäß Fig. 3 eingreift und dadurch beim Einziehen des Kabels 2 eine Drehung desselben bewirkt. Die Profilierung 56 umfasst demnach insbesondere sowohl ein profiliertes Kabel 2 als auch eine profilierte Innenwand 50 des Rohres 20. Alternativ ist vorteilhaft anstelle einer Rippe 58 eine Anzahl von Fürhrungspins oder -Stiften oder Noppen vorgesehen. Hierdurch ist es insbesondere möglich, Material einzusparen, da zumindest ein Teil der Profilierung 56 nicht durchgängig gefertigt werden muss.

In einer geeigneten, hier nicht gezeigten Ausführung, weist ein Rahmen 24 gemäß Fig. 2 anstelle der Rollelemente 44 eine Anzahl von Führungspins auf, die vorteilhafterweise in eine innenwändige Profilierung 56 des Rohres 20, beispielsweise ähnlich Fig. 4 eingreifen oder in dieser einsitzen. Diese Ausführungsform ist besonders einfach, da auf bewegliche Teile, insbesondere die Rollelemente 44 verzichtet werden kann.

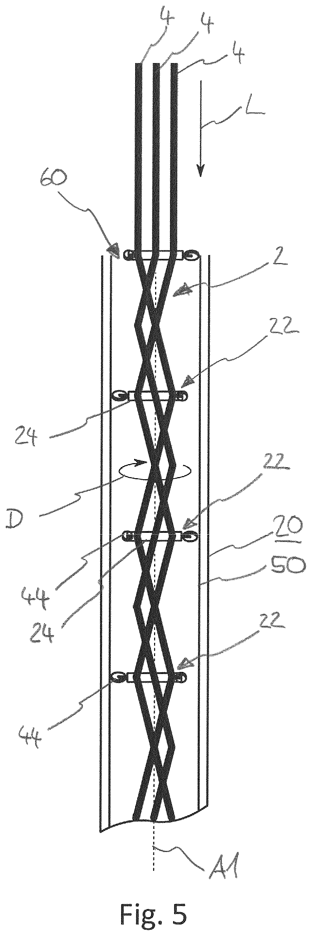

Fig. 5 zeigt schematisch das Einziehen des Kabels 2 in das Rohr gemäß Fig. 2. Das hier gezeigte Kabel 2 umfasst die Teilkabel 4, die außerhalb des Rohres 20 nicht verseilt oder verdreht vorliegen, sondern beispielsweise parallel zueinander geführt. In diesem Fall ist es möglich, dass die drei Teilkabel 4 von einem gemeinsamen Mantel 16, beispielsweise einer Bandierung umgeben und zusammengehalten sind. Der Mantel 16 ist vorzugsweise hinreichend elastisch und/oder verformbar bezüglich einer Torsion, wie sie beispielsweise bei einem nachträglichen Verdrehen auftritt. Alternativ sind die Teilkabel 4 als Einzelkabel bereitgestellt, wodurch sich insbesondere der Transport des Kabels 2 zum Verwendungsort, das heißt hier eine Eingangsöffnung 60 des Rohres 20, dahingehend vereinfacht, dass nicht das gesamte Kabel 2 transportiert werden muss, sondern lediglich Untereinheiten desselben, das heißt insbesondere die Teilkabel 4. Da diese einen geringeren Durchmesser aufweisen als das aus diesen zusammengefügte Kabel 2 ist deren Handhabung entsprechend vereinfacht.

In Fig. 5 werden die drei Teilkabel 4 paralleler in Längsrichtung L aneinanderliegend als Teilkabelverbund geführt. Vorzugsweise sind die Teilkabel 4 wie in Fig. 1 dreieckförmig zusammengelegt oder zusammengefasst. Zum Einziehen in das Rohr 20 wird der Teilkabelverbund, das heißt das Kabel 2 mit einem mehrere Rollelemente 4 aufweisenden Träger 26 gemäß Fig. 2 versehen. Jedes der Rollelemente 44 ist in einem geeigneten Anstellwinkel W schräg eingestellt, um bei Förderung des Kabels 2 in Längsrichtung L eine Verdrehung, das heißt hier eine Verseilung der drei Teilkabel 4 zu erzielen. Vorteilhafterweise sind alle Rollelemente 44 in dem gleichen Anstellwinkel W angestellt.

In regelmäßigen Abständen A wird ein weiterer Träger 26 mit Rollelementen 44 an dem Kabel 2 angebracht, wodurch die einzelnen Rollelemente 44 jeweils dahingehend entlastet werden, dass entsprechend auf diese wirkende Kräfte zweckmäßigerweise auf alle Rollelemente 44 verteilt werden.

Vorzugsweise sitzt oder liegt jedes der Rollelemente 44 an der Innenwand 50 des Rohres 20 an, das heißt, steht mit dieser in Kontakt. Dies ist insbesondere auch in Fig. 5 dargestellt, in der aufgrund der dreieckigen Geometrie des Rahmens 24 jeweils nur zwei Rollelemente 44 sichtbar sind. Um eventuelle Unebenheiten der Innenwand 50 auszugleichen ist jedes Rollelement 44 mit einer hier nicht dargestellten Federvorrichtung versehen, welche eine Federkraft in radialer Richtung bezüglich der Längsachse A1 des Kabels 2 ausübt und dadurch das Rollelement 44 an die Innenwand 50 drückt.

Beim Einziehen des Kabels 2 in das Rohr 20 in Längsrichtung L wird dann mittels der Rollelemente 44 eine in Längsrichtung L gerichtete Einzugs- oder auch Einschubkraft teilweise in eine Drehbewegung in Drehrichtung übersetzt. Hierdurch wird das Kabel 2 derart verdreht, dass die drei Teilkabel 4 miteinander verseilt werden und dadurch insbesondere ein geeignetes Induktionskabel bereitgestellt wird.

Zur Wartung oder zum Austauschen des gesamten Kabels 2 oder Teilen davon ist es geeigneterweise möglich, das Kabel 2 aus dem Rohr 20 auszuziehen, das heißt insbesondere, der Einziehprozess ist reversibel. Dadurch ist es insbesondere möglich, die Verseilung rückgängig zu machen und dann beispielsweise lediglich eines der Teilkabel 4 auszutauschen. Bevorzugterweise werden die Rollelemente 44 zum Ausziehen derart eingestellt, dass er Anstellwinkel W etwa 90° beträgt. In diesem Fall ist die Drehachse A2 senkrecht zur Längsrichtung L und das Kabel 2 ist vorteilhaft ohne Beeinflussung der Verseilung aus dem Rohr 20 ausziehbar.

### Bezugszeichenliste

- 2: Kabel
- 4: Teilkabel
- 6: Zugentlastung
- 8: Aderbündel
- 10: Kabelader
- 12: Innenlage
- 14: Außenlage
- 16: Mantel
- 18: Dreieck (Kabelquerschnitt)
- 20: Rohr
- 22: Verlegehilfe
- 24: Rahmen
- 26: Träger
- 28: Außenseite (des Rahmens)
- 30: Innenseite (des Rahmens)
- 32: Rahmenecke
- 34: Trennstelle (am Rahmen)
- 36: Teilstück
- 38: Steg
- 40: Sensormodul
- 42: Sensor
- 44: Rollelement
- 46: Abrollfläche
- 48: Halterung
- 50: Innenwand (des Rohres)
- 52: Antriebsvorrichtung
- 54: Zugentlastung
- 56: Profilierung
- 58: Rille
- 60: Eingangsöffnung
- A: Abstand
- A1: Längsachse (Kabel)
- A2: Drehachse (bezüglich Abrollen des Rollelementes)
- A3: Rotationsachse (bezüglich Einstellen des Anstellwinkels)
- A4: Abstand (des Rollelementes zur Längsachse)
- D: Drehrichtung
- L: Längsrichtung
- P: Periode (auch Schlaglänge)
- W: Anstellwinkel

## Patentansprüche

1. Verlegehilfe (22) zum Verlegen eines sich in eine Längsrichtung (L) erstreckenden Kabels (2) in ein Rohr (20), mit einem Träger (26), an dem eine Anzahl von Rollelementen (44) angebracht sind, die jeweils um eine Drehachse (A2) drehbar gehaltert sind,
**dadurch gekennzeichnet,**
**dass** jede der Drehachsen (A2) in einem vorgegebenen Anstellwinkel (W) zur Längsrichtung (L) steht, sodass das Kabel (2) beim Verlegen in das Rohr (20) um eine sich in der Längsrichtung (L) erstreckende Längsachse (A1) gedreht wird.

2. Verlegehilfe (22) nach Anspruch 1,
wobei das Kabel (2) ein Induktionskabel ist.

3. Verlegehilfe (22) nach Anspruch 1 oder 2,
welche an dem Kabel (2) angebracht ist und welche derart ausgebildet ist, dass das Kabel (2), welches zum Verlegen in ein Rohr (20) vorgesehen ist, beim Einführen in das Rohr um die Längsachse (L) verdreht wird.

4. Verlegehilfe (22) nach einem der Ansprüche 1 bis 3,
**dadurch gekennzeichnet,**
**dass** der Anstellwinkel (W) einstellbar ist und zum Einstellen des Anstellwinkels (W) die Rollelemente (44) jeweils um eine sich radial von der Längsachse (A1) erstreckende Rotationsachse (A3) drehbar gelagert sind.

5. Verlegehilfe (22) nach einem der Ansprüche 1 bis 4,
**dadurch gekennzeichnet,**
**dass** die Rollelemente (44) jeweils in einem einstellbaren Abstand (A4) von der Längsachse (A1) angeordnet sind.

6. Verlegehilfe (22) nach einem der Ansprüche 1 bis 5,
**dadurch gekennzeichnet,**
**dass** der Träger (26) einen das Kabel (2) umgreifenden Rahmen (24) umfasst mit einer Außenseite (28), auf der die Rollelemente (44) angebracht sind.

7. Verlegehilfe (22) nach Anspruch 6,
**dadurch gekennzeichnet,**
**dass** der Rahmen (24) eine Anzahl an abgerundeten Rahmenecken (32) aufweist und das Kabel (2) mehrere Teilkabel (4) umfasst, wobei in jeder Rahmenecke (32) rahmeninnenseitig eines der Teilkabel (4) anliegt.

8. Verlegehilfe (22) nach einem der Ansprüche 1 bis 7,
**dadurch gekennzeichnet,**
**dass** an dieser eine Zugentlastung befestigt ist, wobei das Kabel (2) in Längsrichtung (L) die Zugentlastung (54) aufweist.

9. Verlegehilfe (22) nach einem der Ansprüche 1 bis 8,
**dadurch gekennzeichnet,**
**dass** diese eine Antriebsvorrichtung (52) aufweist.

10. Verlegehilfe (22) nach einem der Ansprüche 1 bis 9,
**dadurch gekennzeichnet,**
**dass** diese eine wendelförmige Profilierung (56) aufweist.

11. Verfahren zum Verlegen eines sich in eine Längsrichtung (L) erstreckenden Kabels (2), insbesondere Induktionskabels, umfassend die Schritte
- Bereitstellen einer Verlegehilfe (22), welche einen Träger (26) aufweist, an dem eine Anzahl von Rollelementen (44) angebracht sind, die jeweils um eine Drehachse (A2) drehbar gehaltert sind, wobei jede der Drehachsen (A2) in einem vorgegebenen Anstellwinkel (W) zur Längsrichtung (L) steht,
- Verlegen des Kabels (2) in Längsrichtung (L), wobei das Kabel (2) beim Verlegen um eine sich in der Längsrichtung (L) erstreckende Längsachse (A1) mit Hilfe der Verlegehilfe (22) gedreht wird.

12. Verfahren nach Anspruch 11,
**dadurch gekennzeichnet,**
**dass** das Kabel (2) mehrere Teilkabel (4) umfasst, die beim Verlegen miteinander verseilt werden.

13. Verfahren nach einem der Ansprüche 11 oder 12,
**dadurch gekennzeichnet,**
**dass** das Verlegen in Längsrichtung (L) als Einziehen in ein sich in dieser Längsrichtung (L) erstreckendes Rohr (20) ausgeführt wird.

14. Verfahren nach einem der Ansprüche 11 bis 13,
**dadurch gekennzeichnet,**
**dass** die Verlegehilfe (22) eine Profilierung (56) umfasst, die rohrinnenseitig und/oder auf dem Kabel (2) ausgebildet ist.

15. Verfahren nach einem der Ansprüche 11 bis 14,
**dadurch gekennzeichnet,**
**dass** das Kabel (2) mittels an der Verlegehilfe (22) angebrachter und schräg angestellter Rollelemente (44) gedreht wird.

## Claims

1. Laying aid (22) for laying a longitudinally (L) extending cable (2) into a pipe (20),
said laying aid having a carrier (26) to which a number of rolling elements (44) are attached, each of which is rotatably supported about an axis of rotation (A2),
**characterized in**
**that** each of the axes of rotation (A2) is located at a predetermined setting angle (W) to the longitudinal direction (L), so that the cable (2) when laying in the pipe (20) is rotated about a longitudinal axis (A1) which extends in the longitudinal direction (L).

2. Laying aid (22) according to Claim 1,
the cable (2) being an induction cable.

3. Laying aid (22) according to Claim 1 or 2,
which is attached to the cable (2) and which is designed such that the cable (2), which is provided for laying in a pipe (20), is rotated about the longitudinal axis (L) when inserted into the pipe.

4. Laying aid (22) according to any one of Claims 1 to 3,
**characterized in**
**that** the setting angle (W) is adjustable and for adjusting the setting angle (W) the rolling elements (44) are each rotatably mounted about a rotation axis (A3) extending radially from the longitudinal axis (A1).

5. Laying aid (22) according to one of Claims 1 to 4,
**characterized in**
**that** the rolling elements (44) are each arranged at an adjustable distance (A4) from the longitudinal axis (A1).

6. Laying aid (22) according to one of Claims 1 to 5,
**characterized in**
**that** the carrier (26) comprises a frame (24) encompassing the cable (2) with an outer side (28) on which the rolling elements (44) are attached.

7. Laying aid (22) according to Claim 6,
**characterized in**
**that** the frame (24) has a number of rounded frame corners (32) and the cable (2) comprises a plurality of partial cables (4), one of the partial cables (4) abutting the frame inside each frame corner (32).

8. Laying aid (22) according to any one of Claims 1 to 7,
**characterized in**
**that** a strain relief is attached to said laying aid, wherein the cable (2) comprises the strain relief (54) in the longitudinal direction (L).

9. Laying aid (22) according to one of Claims 1 to 8,
**characterized in**
**that** it has a drive device (52).

10. Laying aid (22) according to one of Claims 1 to 9,
**characterized in**
**that** it has a helical profiling (56).

11. Method for laying a cable (2) extending in a longitudinal direction (L), in particular an induction cable, comprising the steps
- providing a laying aid (22) which has a carrier (26) on which a number of rolling elements (44) are attached, each of which is rotatably supported about an axis of rotation (A2), wherein each of the axes of rotation (A2) are located in a predetermined setting angle (W) to the longitudinal direction (L),
- laying the cable (2) in the longitudinal direction (L), wherein the cable (2) when laying, with the aid of the laying aid (22), is rotated around a longitudinally (L) extending longitudinal axis (A1).

12. Method according to Claim 11,
**characterized in**
**that** the cable (2) comprises several partial cables (4) which are stranded together when laid.

13. Method according to any one of Claims 11 or 12,
**characterized in**
**that** the laying in the longitudinal direction (L) is executed as pulling into a pipe (20) which extends in said longitudinal direction (L).

14. Method according to any one of Claims 11 to 13,
**characterized in**
**that** the laying aid (22) comprises a profiling (56) which is formed on the inside of the pipe and/or on the cable (2).

15. Method according to any one of Claims 11 to 14,
**characterized in**
**that** the cable (2) is rotated by means of rolling elements (44) which are attached to the laying aid (22) and inclined.

## Revendications

1. Aide à la pose (22) pour la pose d'un câble (2) dans un tuyau (20), ledit câble s'étendant longitudinalement (L),
l'aide de pose ayant un support (26) auquel sont fixés un certain nombre d'éléments roulants (44), chacun de ces éléments étant monté rotatif autour d'un axe de rotation (A2),
**caractérisé en ce**
**que** chacun des axes de rotation (A2) est disposé selon un angle de réglage prédéterminé (W) par rapport à la direction longitudinale (L), de sorte que le câble (2) lors de la pose dans le tuyau (20) tourne autour d'un axe longitudinal (A1) qui s'étend dans le sens longitudinal (L).

2. Aide à la pose (22) selon la revendication 1,
le câble (2) étant un câble à induction.

3. Aide à la pose (22) selon la revendication 1 ou 2,
qui est attaché au câble (2) et qui est conçu de telle sorte que le câble (2), qui est prévu pour être posé dans un tuyau (20), tourne autour de l'axe longitudinal (L) lorsqu'il est inséré dans le tuyau.

4. Aide à la pose (22) selon l'une quelconque des revendications 1 à 3,
**caractérisé en ce**
**que** l'angle d'attaque (W) est réglable et pour régler l'angle d'attaque (W), les éléments roulants (44) sont chacun montés rotatifs autour d'un axe de rotation (A3) s'étendant radialement à partir de l'axe longitudinal (A1).

5. Aide à la pose (22) selon l'une des revendications 1 à 4,
**caractérisé en ce**
**que** les éléments roulants (44) sont chacun disposés à une distance réglable (A4) de l'axe longitudinal (A1).

6. Aide à la pose (22) selon l'une des revendications 1 à 5,
**caractérisé en ce**
**que** le support (26) comprend un cadre (24) entourant le câble (2) avec un extérieur (28) sur lequel les éléments roulants (44) sont fixés.

7. Aide à la pose (22) selon la revendication 6,
**caractérisé en ce**
**que** le cadre (24) a un certain nombre de coins de cadre arrondis (32) et que le câble (2) comprend une pluralité de câbles élémentaires (4), dans lequel l'un des câbles élémentaires (4) s'appuie du côté intérieur de chaque coin de cadre (32).

8. Aide à la pose (22) selon l'une quelconque des revendications 1 à 7,
**caractérisé en ce**
**qu'**une décharge de traction y est attaché, le câble (2) ayant le décharge de traction (54) dans le sens longitudinal (L).

9. Aide à la pose (22) selon l'une des revendications 1 à 8,
**caractérisé en ce**
**qu'**il a un dispositif d'entraînement (52).

10. Aide à la pose (22) selon l'une des revendications 1 à 9,
**caractérisé en ce**
**qu'**il a un profilage hélicoïdal (56).

11. Procédé de pose d'un câble (2) s'étendant dans une direction longitudinale (L), notamment d'un câble à induction, comprenant les étapes
- fournir une aide à la pose (22) qui présente un support (26) sur lequel sont fixés un certain nombre d'éléments roulants (44), dont chacun est supporté en rotation autour d'un axe de rotation (A2), dans lequel chacun des axes de rotation (A2) sont disposés selon un angle d'attaque prédéterminé (W) par rapport à la direction longitudinale (L),
- pose du câble (2) dans le sens longitudinal (L), lors de la pose le câble (2) étant tourné à l'aide de l'aide à la pose (22) autour d'un axe longitudinal (A1) qui s'étend dans le sens longitudinal (L).

12. Procédé selon la revendication 11,
**caractérisé en ce**
**que** le câble (2) comprend plusieurs câbles élémentaires (4) qui sont toronnés ensemble lors de la pose.

13. Procédé selon l'une quelconque des revendications 11 ou 12,
**caractérisé en ce**
**que** la pose dans la direction longitudinale (L) est effectuée en tirant dans un tuyau (20) s'étendant dans ladite direction longitudinale (L).

14. Procédé selon l'une quelconque des revendications 11 à 13,
**caractérisé en ce**
**que** l'aide à la pose (22) comprend un profilage (56) qui est formé à l'intérieur du tuyau et/ou sur le câble (2).

15. Procédé selon l'une quelconque des revendications 11 à 14,
**caractérisé en ce**
**que** le câble (2) est mis en rotation au moyen d'éléments roulants (44) fixés à l'aide à la pose (22) et inclinés.
